# EUROPÄISCHE PATENTSCHRIFT

(11) **EP 1 157 804 B1**
(45) Veröffentlichungstag und Bekanntmachung des Hinweises auf die Patenterteilung: **06.07.2005**
(21) Anmeldenummer: 01110283.7
(22) Anmeldetag: 26.04.2001
(51) Int. Cl.: B29C 47/52

(54) **Zahnradextruder**
Gear-pump extruder
Extrudeuse à pompe à engrenages

(30) Priorität: 22.05.2000 DE 10025223; 19.07.2000 DE 10034998
(43) Veröffentlichungstag der Anmeldung: 28.11.2001
(73) Patentinhaber: Troester GmbH & Co.KG, D-30519 Hannover (DE)
(72) Erfinder: Reineke, Frank, D-30519 Hannover (DE)
(74) Vertreter: Junius, Walther, Dr.

(56) Entgegenhaltungen:
- GB-A- 1 574 357
- SU-A- 901 628
- US-A- 3 280 886
- US-A- 5 005 982

## Beschreibung

Die Erfindung betrifft einen Zahnradextruder, bestehend aus einem Paar ineinandergreifender extrudierender Zahnräder in einem Gehäuse, in welchem eine Antriebswelle für das eine Zahnrad gelagert ist, das mit einem Eingang und einem Ausgang für das zu extrudierende Material versehen ist und das im Eingangsbereich als Einzugshilfe ein gegensinnig rotierendes Paar von Walzen aufweist, wobei jede dieser Einzugswalzen mit einer Verzahnung versehen ist, die nur einen Teil der für den Einzug zur Verfügung stehenden Breite einnimmt und in die Verzahnung eines der beiden extrudierenden Zahnräder eingreift.

Um die bei Zahnradextrudern auftretenden Schwierigkeiten beim Einzug eines zu verarbeitenden Materialstreifens zu überwinden, benutzt man Einzugshilfen in Form von dem extrudierenden Zahnradpaar vorgeschalteter Paaren von Einzugszahnrädem (US 5 005 982 A) oder von Einzugswalzen (GB 1 574 357 A). In beiden Fällen ist es auch bekannt, die Rotation der Einzugshilfen von den extrudierenden Zahnrädern abzuleiten. So hat man in einer Ausführungsform derGB 1 574 357 auch die Einzugswalzen beidseitig mit einer Verzahnung versehen, die in die Verzahnung der extrudierenden Zahnräder eingreifen.

Nachteil der Einzugszahnräder ist es, daß, wenn sie eng zueinander stehen, den Materialstreifen abquetschen können, so daß dieser neu in die Maschine eingeführt werden muß, wenn sie zu weit auseinander stehen und zwischen sich einen zu weiten Spalt einschließen, nicht wirksam fördern und einziehen. Bei Einzugswalzenpaaren liegen die Verhältnisse ähnlich, bei einem zu engen Spalt staut sich das einzuziehende Material vor dem Spalt und tritt nur unter Schwierigkeiten vor dem Spalt, bei einer zu weiten Spaltbreite können die Walzen nicht mit der nötigen Einzugskraft fördern.

Die Erfindung vermeidet die Nachteile des Standes der Technik. Es ist die Aufgabe der Erfindung, den Einzug des zu verarbeitenden Materialstreifens sicherer und weniger störungsanfällig zu machen.

Die Erfindung besteht darin, daß die Verzahnung der einen Einzugswalze einen Teil, die Verzahnung der anderen Einzugswalze einen anderen Teil der für den Einzug zur Verfügung stehenden Breite einnimmt.

Der Einzug des zu verarbeitenden Materialstreifens wird dadurch sicherer und weniger störungsanfällig, weil sich die Zähne des verzahnten Teiles der Einzugswalzen in den zu bearbeitenden Materialstreifen hineinbeißen und dadurch sicherer fördern. Die zum Einziehen aufgewandte Energie wird besser genutzt, weil eine Plastifizierung und Aufschließung des Materials bereits durch die Einzugswalzen beginnt: Durch die zweiteilige Anordnung der Verzahnungen wird der zugeführte Materalstreifen in zwei Teile getrennt. Ein Teil wird mit der Verzahnung der einen Einzugswalze, der andere Teil mit der Verzahnung der anderen Einzugswalze mitgenommen. Das in den Zahnlücken befindliche Material wird beim Eingriffsvorgang der Verzahnungen von Einzugswalzen und Zahnrädern wieder aus den Zahnlücken ausgepreßt und umgelagert.Dadurch wird mit den Einzugswalzen ein verbesserter Materialaufschluß zusätzlich erreicht.

Hierbei kann es vorteilhaft sein, daß die Verzahnung der einen Einzugswalze einen rechten, die Verzahnung der anderen Einzugswalze einen linken Teil der für den Einzug zur Verfügung stehenden Breite einnimmt.

Dabei kann die Summe der Breiten der Verzahnungen auf den Einzugswalzen die volle für den Einzug zur Verfügung stehende Breite einnimmt.

Die Teilung des Mantels der Einzugswalzen in einen verzahnten Teil und einen Walzenteil bringt es mit sich, daß die Fördermenge der Einzugswalzen mit Verzahnung gegenüber Einzugswalzen ohne Verzahnung geringer sein kann, wenn der Zahngrund und die Walzenoberfläche gleichen radialen Abstand von der Achse haben. Daher kann es zur Erhöhung der Fördermenge des von den Einzugswalzen eingezogenen Materials in den zwischen Einzugswalzen und Zahnrädern gebildeten Stauraum vorteilhaft sein, daß der radiale Abstand des Walzenteils der Einzugswalzen von deren geometrischer Achse kleiner als der radiale Abstand des Zahngrundes des verzahnten Teils der Einzugswalzen von deren geometrischer Achse ist.

Bei dieser besonderen Gestaltung eines Zahnradextruders ist es zweckmäßig, daß die ineinander greifenden Zahnräder eine Pfeilverzahnung aufweisen und jede Verzahnung auf den Einzugswalzen eine Schrägverzahnung ist.

Um die Effektivität des Zahnradextruders voll zu nutzen, sind die Zahnlücken der Zahnräder möglichst weitgehend mit dem zu extrudierenden Material zu füllen, was den weiteren Vorteil mit sich bringt, daß weniger Luft durch die Zahnräder gefördert und dabei in das Extrudat eingebracht wird. Dabei ist es dienlich, daß der Durchmesser eines unverzahnten Walzenteils der Einzugswalzen kleiner als der Durchmesser des Zahngrundes des verzahnten Teils der Einzugswalzen ist. Ebenso ist es förderlich, daß ein Walzenteil der einen Einzugswalze einem verzahnten Teil der anderen Einzugswalze gegenübersteht.

Der Füllungsgrad der Zahnlücken der Zahnräder hängt weitgehend vom Füllungsgrad des Stauraumes zwischen den Einzugswalzen und den Zahnrädern ab. Daher ist eine vollständige Füllung des Stauraumes anzustreben, d.h. es ist im Stauraum auch der Bereich hinter den Verzahnungen der Einzugswalzen zu füllen. Dieses erfolgt bei ausreichender Förderleistung der Einzugswalzen durch Umlagerung eines Teils der eingezogenen Masse hinter den verzahnten Teil der Einzugswalzen. Dieses überströmen und Umlagern der in den Stauraum geförderten Masse in Bereiche hinter die Verzahnungen der Einzugswalzen bildet eine Vorstufe des Plastifizierungsvorganges in diesem Zahnradextruder.Denn in Bereichen unmittelbar hinter dem Walzenteil der Einzugswalzen ist ein Materialüberschuß mit abgescherten Teilen, die nicht von den Zahnlücken der Zahnräder aufgenommen werden konnten und nun von nachgefördertem Material zur Seite weggedrängt werden. Dieses überströmen der in den Stauraum geförderten Masse in Bereiche hinter die Verzahnungen der Einzugswalzen wird erleichtert, wenn in den die Zahnräder umgebenden Teil des Gehäuses eine Nut eingearbeitet ist. Diese Nut erleichtert die Materialverschiebung in Richtung parallel zu den Achsen der Zahnräder.

Dieses Abscheren von Massenteilen und diese Materialumlagerungen und -verschiebungen bewirken eine besonders intensive Plastifizierung der zu verarbeitenden Masse. Dadurch beginnt bei dieser Extrusionsanlage die Plastifizierung bereits vor dem Ineinandergreifen der Zahnräder dieses Zahnradextruders im Einzugsbereich, was diese Extrusionsvorrichtung in der Intensität und Qulität der Plastifizierung deutlich von Anlagen des Standes der Technik abhebt.

Der Aufbau dieses Zahnradextruders wird sehr einfach, wenn die Zahnräder und die Einzugswalzen in einzeln auswechselbaren Gleitlagern gelagert sind die einzeln bei Verschleiß ausgetauscht werden können.

Einem einfachen Aufbau dieses Zahnradextruders dient es auch, daß alle in Eingriff befindlichen verzahnten Teile der Einzugswalzen und der Zahnräder denselben Achsabstand sowie dieselben Teilkreis- und Kopfkreisdurchmesser haben.

Für die Dichtheit und somit die Funktion dieses Zahnradextruders ist es wesentlich, daß je ein Gleitlager der Einzugswalzen einen den Walzenteil teilweise dicht umfassenden Ansatz aufweist, der so gestaltet ist, daß er ein Rückfließen des geförderten Materials aus dem Stauraum in den Einzugsbereich oder in den verzahnten Teil der Einzugswalzen verhindert.

Von Vorteil kann es sein, daß in Lagern mit dem Ansatz eine Nut eingearbeitet ist.

Anstelle dieses Ansatzes an dem Gleitlager kann aber auch das Gehäuse so gestaltet sein, daß nur ein enger Spalt zwischen dem Gehäuse und der Oberfläche des Walzenteiles verbleibt, der ein Rückfließen des geförderten Materials aus dem Stauraum in den Einzugsbereich oder in den verzahnten Teil der Einzugswalzen verhindert.

Weitere vorteilhafte Ausgestaltungen der Erfindung sind in den Unteransprüchen gekennzeichnet.

Die Erfindung ist nachstehend anhand von in der Zeichnungen schematisch dargestellten Ausführungsbeispielen näher erläutert. Es zeigen:
Fig.1 eine Darstellung der Zahnrad- und Walzenanordnung.
Fig.2 eine Ansicht des Einzugsaggregates.
Fig.3 eine Ansicht des extrudierenden Zahnradpaares

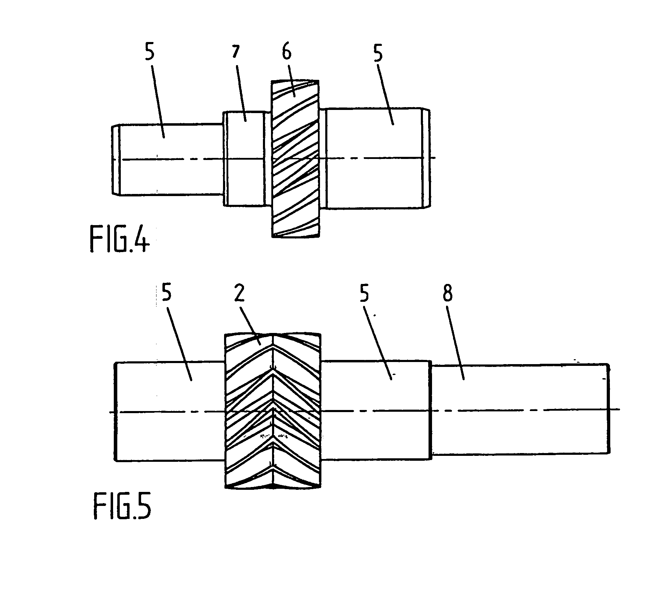

Fig.4 eine Ansicht einer Einzugswalze mit Verzahnung

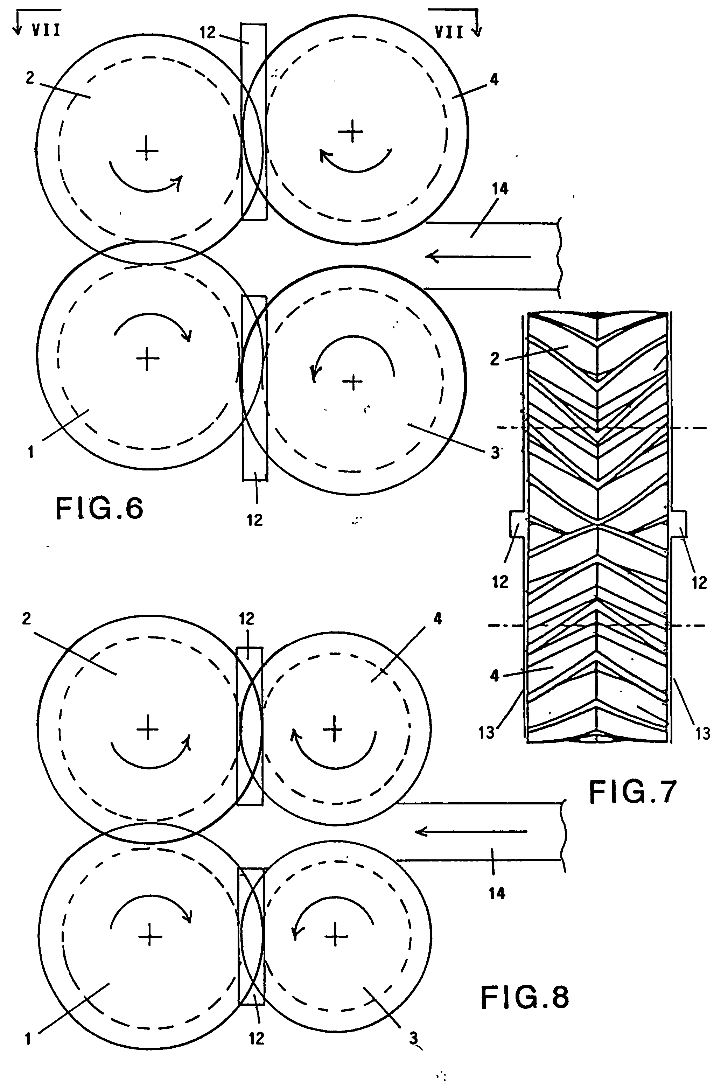

Fig.5 eine Ansicht eines Zahnrades

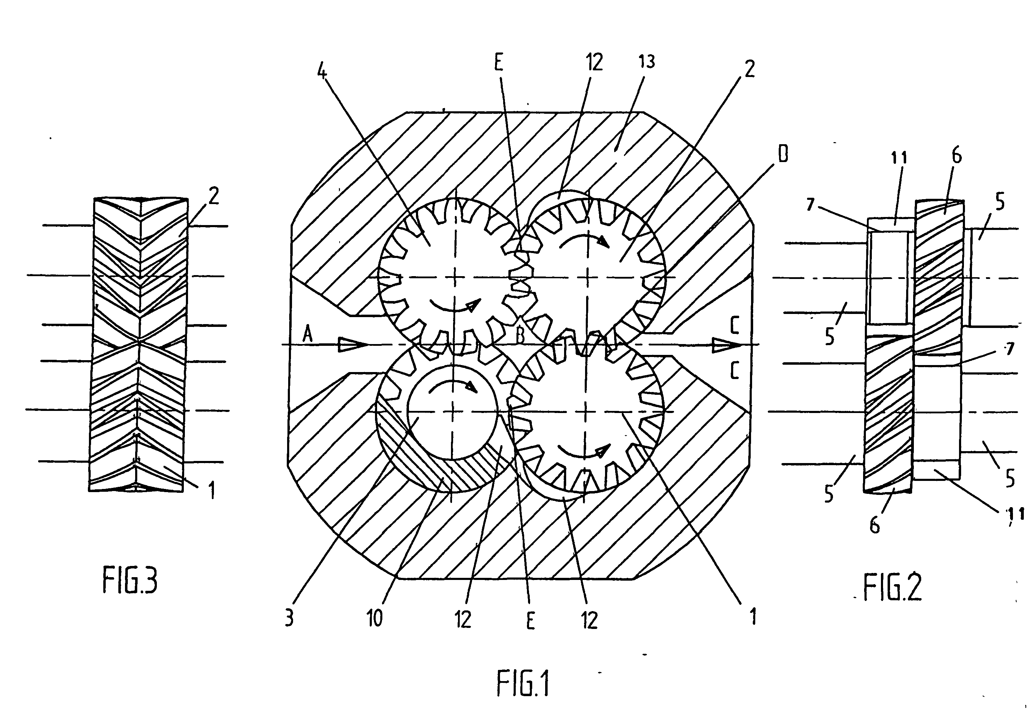

In Fig.1 ist die Zahnrad- und Walzenanordnung des erfindungsgemäßen Zahnradextruders der ersten Ausführungsform dargestellt: Den beiden miteinander im Eingriff befindlichen Zahnrädem 1,2 sind zwei Einzugswalzen 3,4 unmittelbar vorgeschaltet. Jede dieser beiden Einzugswalzen 3,4 weist zwei zwischen den Lagerzapfen 5 angeordnete nebeneinanderliegende Bereiche 6,7 auf, nämlich einen verzahnten Bereich 6 und einen Walzenbereich 7.Die beiden Einzugswalzen 3,4 sind so angeordnet, daß bei der einen Einzugswalze 3 die Verzahnung auf der linken Seite, bei der anderen Einzugswalze auf der rechten Seite befindlich ist. So stehen sich bei den Einzugswalzen 3,4 immer ein Walzenteil 7 und ein Zahnradteil 6 gegenüber.

Die Zahnradteile 6 der beiden Einzugswalzen 3,4 stehen mit den Zahnrädern 1,2 in Eingriff. Daher benötigen die Einzugswalzen 3,4 keinen gesonderten Antrieb. Die Antriebswelle 8, die das Zahnrad 1 antreibt, treibt das Zahnrad 2 mit an, weil dessen Verzahnung in die Verzahnung des Zahnrades 1 eingreift und treibt außerdem die beiden Einzugswalzen 3,4 an, weil deren Verzahnungen 6 in die Verzahnungen der beiden Zahnräder 1,2 eingreifen.

Die Pfeile in Fig.1 stellen den Materialfluß dar: Am Ort A wird der zu verarbeitende Materialstreifen in den Spalt zwischen den Einzugswalzen 3,4 eingeführt. Dort wird der Materialstreifen aufgeteilt und durch die Verzahnung 6 der Einzugswalzen 3,4 mit quer verlaufenden Kerben versehen. Damit wird das ankommende Material ein erstes Mal gequetscht und gewalkt. Durch die Einzugswalzen 3,4 und die in den Materialstreifen sich einseitig eindrückenden Zähne der Verzahnung 6 wird das Material durch den Spalt 11 zwischen demWalzenteil 7 der einen Einzugswalze (3 oder 4) und der Verzahnung 6 der anderen Einzugswalze (4 oder 3) in den Raum B gefördert. Hier entsteht ein Materialstau vor den Zahnrädern 1,2. In diesen Materialstau greifen die Zähne der Zahnräder 1,2, reißen hier Materialstücke heraus und fördern sie in ihren Zahnlücken in den Raum C. Dabei kann jedes Zahnrad 1,2 immer nur mit der Hälfte seiner Verzahnung Material fördern, aus der anderen Hälfte der Zahnradbreite wird mitgenommenes Material aus den Zahnlükcken durch die Zähne der Verzahnung 6 der Einzugswalzen 3,4 am Ort E herausgequetscht. Dieses Herausquetschen des Materiales aus den Zahnlücken führt zu einer starken Plastifizierung des hier befindlichen Materiales. Denn es ist derselbe Vorgang, der sich bei jedem Zahnradextruder am Ort D zwischen den ineinander greifenden Verzahnungen der Zahnräder 1,2 abspielt, nur daß dieser Vorgang hier zusätzlich und vor den ineinander greifenden Zahnrädern 1,2 stattfindet. Das beim Eingreifen der Verzahnungen 6 der Einzugswalzen 3,4 in die Verzahnungen der Zahnräder 1,2 aus den Zahnlücken herausgequetschte Material entweicht in den Stauraum B und kann über den Walzenbereich 7 den Ort E passieren und in den Raum C gefördert werden. Diesen Raum C kann das Material nur in Pfeilrichtung verlassen, denn die über ihre volle Breite miteinander am Ort D ineinandergreifenden Zahnräder 1,2 lassen kein in ihren Zahnlücken gelagertes Material durch die Eingriffsstelle D hindurchgehen, vielmehr wird jegliches in den Zahnlücken befindliches Material aus den Zahnlükken hier herausgequetscht. Somit findet eine besonders intensive Plastifizierung in einer höchst einfach aufgebauten Maschine statt.

Aus Fig.1 ist ersichtlich, daß die Lagerbuchsen 9 noch einen den Walzenteil der Einzugswalzen 3,4 teilweise umgebenden Ansatz 10 haben, der den Materialrückfluß aus dem Stauraum B in die Einzugsstelle A verhindert und der der Feinabstimmung der geometrischen Gegebenheiten an das zu verarbeitende Material dient.

## Patentansprüche

1. Zahnradextruder,
bestehend aus einem Paar ineinandergreifender extrudierender Zahnräder (1,2) in einem Gehäuse (13),
in welchem eine Antriebswelle (8) für das eine Zahnrad (2) gelagert ist,
das mit einem Eingang (A) und einem Ausgang (C) für das zu extrudierende Material versehen ist
und das im Eingangsbereich als Einzugshilfe ein gegensinnig rotierendes Paar von Walzen (3,4) aufweist,
wobei jede dieser Einzugswalzen (3,4) mit einer Verzahnung (6) versehen ist,
die nur einen Teil der für den Einzug zur Verfügung stehenden Breite einnimmt und
in die Verzahnung eines der beiden extrudierenden Zahnräder (1,2) eingreift
**dadurch gekennzeichnet,**
**daß** die Verzahnung (6) der einen Einzugswalze (3) einen Teil, die Verzahnung (6) der anderen Einzugswalze (4) einen anderen Teil der für den Einzug zur Verfügung stehenden Breite einnimmt.

2. Zahnradextruder nach Anspruch 1,
wobei die Verzahnung (6) der einen Einzugswalze (3) einen rechten, die Verzahnung (6) der anderen Einzugswalze (4) einen linken Teil der für den Einzug zur Verfügung stehenden Breite einnimmt.

3. Zahnradextruder nach Anspruch 1 oder 2,
wobei die Summe der Breiten der Verzahnungen (6) auf den Einzugswalzen (3,4) die volle für den Einzug zur Verfügung stehende Breite einnimmt.

4. Zahnradextruder nach Anspruch 1 oder 2,
wobei die ineinander greifenden Zahnräder (1,2) eine Pfeilverzahnung aufweisen
und jede Verzahnung (6) auf den Einzugswalzen (3,4) eine Schrägverzahnung ist.

5. Zahnradextruder nach Anspruch 1 oder 2,
wobei der Durchmesser eines unverzahnten Walzenteils (7) der Einzugswalzen (3,4) kleiner als der Durchmesser des Zahngrundes des verzahnten Teils (6) der Einzugswalzen (3,4) ist.

6. Zahnradextruder nach Anspruch 1 oder 2,
wobei die Zahnräder (1,2) und die Einzugswalzen (3,4) in einzeln auswechselbaren Gleitlagern (9) gelagert sind.

7. Zahnradextruder nach Anspruch 1 oder 2,
wobei zumindest ein Gleitlager (9) jeder Einzugswalze (3,4) einen den Walzenteil (7) teilweise umfassenden Ansatz (10) aufweist.

8. Zahnradextruder nach Anspruch 1 oder 2,
wobei ein Walzenteil (7) der einen Einzugswalze (3 oder 4) einem verzahnten Teil (6) der anderen Einzugswalze (4 oder 3) gegenübersteht.

9. Zahnradextruder nach Anspruch 1 oder 2,
wobei alle in Eingriff befindlichen verzahnten Teile (6) der Einzugswalzen (3,4) und der Zahnräder (1,2) denselben Achsabstand sowie dieselben Teilkreis- und KopfkreisDurchmesser haben.

10. Zahnradextruder nach Anspruch 1 oder 2,
wobei in Lagern mit dem Ansatz (10) eine Nut (12) eingearbeitet ist.

## Claims

1. Gear extruder consisting of a pair of meshing extruding gearwheels (1, 2) in a housing (13), in which a drive shaft (8) for the one gearwheel (2) is mounted, which is provided with an inlet (A) and an outlet (C) for the material to be extruded and which, in the inlet region, has a pair of rollers (3, 4) rotating in the opposite direction as an intake aid, wherein each of these intake rollers (3, 4) is provided with teeth (6) which take up only a part of the width available for intake and engage in the teeth of one of the two extruding gearwheels (1, 2), **characterised in that** the teeth (6) of the one intake roller (3) take up one part and the teeth (6) of the other intake roller (4) take up another part of the width available for intake.

2. Gear extruder according to claim 1, wherein the teeth (6) of the one intake roller (3) take up a right-hand part and the teeth (6) of the other intake roller (4) take up a left-hand part of the width available for intake.

3. Gear extruder according to claim 1 or 2, wherein the sum of the widths of the teeth (6) on the intake rollers (3, 4) take up the full width available for intake.

4. Gear extruder according to claim 1 or 2, wherein the meshing gearwheels (1, 2) have arrow teeth and each set of teeth (6) on the intake rollers (3, 4) is an oblique set of teeth

5. Gear extruder according to claim 1 or 2, wherein the diameter of an untoothed roller part (7) of the intake rollers (3, 4) is smaller than the diameter of the tooth base of the toothed part (6) of the intake rollers (3, 4).

6. Gear extruder according to claim 1 or 2, wherein the gearwheels (1, 2) and the intake rollers (3, 4) are mounted in individually replaceable plain bearings (9).

7. Gear extruder according to claim 1 or 2, wherein at least one plain bearing (9) of each intake roller (3, 4) has a lug (10) partially encompassing the roller part (7).

8. Gear extruder according to claim 1 or 2, wherein a roller part (7) of the one intake roller (3 or 4) opposes a toothed part (6) of the other intake roller (4 or 3).

9. Gear extruder according to claim 1 or 2, wherein all the toothed parts (6) of the intake rollers (3, 4), which are in engagement, and of the gear wheels (1, 2) have the same axial spacing and the same reference diameter and outside diameter.

10. Gear extruder according to claim 1 or 2, wherein a groove (12) is incorporated in bearings with the lug (10).

## Revendications

1. Extrudeuse à engrenages,
comprenant une paire d'engrenages (1, 2) d'extrusion s'engrenant l'un dans l'autre dans un boîtier (13),
dans laquelle est logé un arbre moteur (8) pour un engrenage (2),
qui est doté d'une entrée (A) et d'une sortie (C) pour le matériau à extruder
et qui comprend dans la zone d'entrée, en tant qu'aide à l'alimentation, une paire de rouleaux (3, 4) tournant en sens inverse,
où chacun de ces rouleaux d'alimentation (3, 4) est doté d'une denture (6),
qui ne couvre qu'une partie de la largeur disponible pour l'alimentation et
s'engage dans la denture d'un des deux engrenages d'extrusion (1, 2)
**caractérisée en ce que**
la denture (6) d'un rouleau d'alimentation (3) couvre une partie, la denture (6) de l'autre rouleau d'alimentation (4) couvrant une autre partie, de la largeur disponible pour l'alimentation.

2. Extrudeuse à engrenages selon la revendication 1,
où la denture (6) d'un rouleau d'alimentation (3) couvre une partie droite, la denture (6) de l'autre rouleau d'alimentation (4) couvrant une partie gauche, de la largeur disponible pour l'alimentation.

3. Extrudeuse à engrenages selon la revendication 1 ou 2, où la somme des largeurs des dentures (6) sur les rouleaux d'alimentation (3, 4) couvre toute la largeur disponible pour l'alimentation.

4. Extrudeuse à engrenages selon la revendication 1 ou 2, où les engrenages (1, 2) s'engrenant l'un dans l'autre comprennent une denture chevronnée et chaque denture (6) sur les rouleaux d'alimentation (3, 4) comprend une denture oblique.

5. Extrudeuse à engrenages selon la revendication 1 ou 2, où le diamètre d'une partie de rouleau (7) non dentée des rouleaux d'alimentation (3, 4) est inférieur au diamètre de la base dentée de la partie dentée (6) des rouleaux d'alimentation (3, 4).

6. Extrudeuse à engrenages selon la revendication 1 ou 2, où les engrenages (1, 2) et les rouleaux d'alimentation (3, 4) sont logés dans des paliers lisses (9) remplaçables.

7. Extrudeuse à engrenages selon la revendication 1 ou 2, où au moins un palier lisse (9) de chaque rouleau d'alimentation (3, 4) comprend un rebord (10) entourant partiellement la partie de rouleau (7).

8. Extrudeuse à engrenages selon la revendication 1 ou 2, où une partie de rouleau (7) d'un rouleau d'alimentation (3 ou 4) fait face à une partie dentée (6) de l'autre rouleau d'alimentation (4 ou 3).

9. Extrudeuse à engrenages selon la revendication 1 ou 2, où toutes les parties dentées (6), se trouvant en prise, des rouleaux d'alimentation (3, 4) et des engrenages (1, 2) présentent le même entraxe, ainsi que le même diamètre primitif de référence et le même diamètre de tête.

10. Extrudeuse à engrenages selon la revendication 1 ou 2, où une rainure (12) est enfoncée dans les paliers avec le rebord (10).
